# EUROPÄISCHE PATENTANMELDUNG

(11) **EP 2 378 646 A1**
(43) Veröffentlichungstag der Anmeldung: **19.10.2011**
(21) Anmeldenummer: 10160091.4
(22) Anmeldetag: 15.04.2010
(51) Int. Cl.: H02K 15/03, H02K 1/27

(54) **Verfahren und Einrichtung zur Magnetisierung permanent-erregter Synchronmaschinen sowie Rotor für solche Synchronmaschinen**

(71) Anmelder: Brusa Elektronik AG, 9466 Sennwald (CH)
(72) Erfinder: Mathoy, Arno, 9472 Grabs (CH)
(74) Vertreter: Rosenich, Paul

(57) **Zusammenfassung**

Die Erfindung betrifft ein Verfahren und eine Einrichtung zur Magnetisierung einer permanent-erregten Synchronmaschine (1), insbesondere eines permanent-erregten Hybrid-Synchronmotors. Im Rotor (5) sind eingebettete Permanentmagnete (13A,13B,13C) angeordnet, welche durch die Anwendung von Spulen (17) einer Magnetisierungseinrichtung (18) magnetisiert werden. Zur Vereinfachung der Montierung und Verkürzung der Magnetisierungstaktzeiten werden die Permanentmagnete (13A,13B,13C) in ihrem unmagnetisierten Zustand in den vormontierten Rotor (5) eingelegt, und danach deren Magnetisierung während des Produktionsverfahrens der Synchronmaschine (1) mittels der, mindestens großenteils ins Innere des zu magnetisierenden Rotors (5) angeordneten Spulen (17) der Magnetisierungseinrichtung (18) In-situ durchgeführt wird. Der Rotor (5) ist so ausgestaltet, dass im Rotorkern (6) Hohlräume (15A,15B,15C) zur Aufnahme der magnetisierenden Spulen (17) vorgesehen sind.

## Beschreibung

### TECHNISCHES GEBIET

Die vorliegende Erfindung bezieht sich auf ein Verfahren und eine Einrichtung zur Magnetisierung einer durch Permanentmagneten erregter Synchronmaschinen nach dem Oberbegriff der beigelegten Ansprüche 1 bzw. 8. Ferner betrifft die Erfindung einen zu magnetisierenden Rotor für solche Synchronmaschinen nach dem Oberbegriff des Anspruchs 10.

Die Erfindung betrifft insbesondere eine Magnetisierungstechnologie während des Produktionsprozesses permanent-erregter Synchronmaschinen, insbesondere Hybrid-Synchronmaschinen, bei welchen die Permanentmagneten innerhalb des Rotors in mehreren Schichten übereinander angeordnet werden. Solche Hybrid-Synchronmaschinen werden insbesondere bei elektrischen Antrieben für Straßenfahrzeuge angewendet.

### STAND DER TECHNIK

Wie bekannt, sind bei elektrischen Antrieben für Straßenfahrzeuge Motoren mit einem, über einen sehr großen Drehzahlbereich konstanten Leistungsvermögen erwünscht. Mit dieser Motorcharakteristik entfallen meistens die Getriebe mit variabler Untersetzung, sei sie stufig oder kontinuierlich ausgeführt.

Von den bekannten Motortypen, die sich für diese spezielle Anwendung eignen können, sind die Asynchronmaschine und die stromerregte Synchronmaschine ohne Permanentmagnete behaftet. Von permanent magnetisierten Synchronmotoren eignen sich jedoch nur sehr spezielle Ausführungsformen für diese Aufgabe. Bei hybrid-erregten Synchronmotoren führt die Bestückung mit Permanentmagneten nur zu einer teilweisen Erregung des Magnetkreises, der Rest erfolgt im Betrieb über eine Stromkomponente je nach Bedarf.

Im Gegensatz zu den üblichen Ausführungsformen, bei denen die Permanentmagneten entweder an der Rotoroberfläche oder direkt unter der Rotoroberfläche untergebracht sind, liegen die Permanentmagnete bei Hybrid-Synchronmotoren (HSM) in zwei oder mehreren Schichten übereinander.

Magnetisierungsvorrichtungen sind nach dem Stand der Technik in an sich bekannt, eignen sich jedoch nur für Magnetanordnungen an oder nur in einer Schicht unter der Rotoroberfläche. Bei mehrschichtigen Magnetanordnungen versagen die herkömmlichen Magnetisiereinrichtungen, weil ihre an der Rotoroberfläche anliegenden Magnetisierungsspulen tief im Innern des Rotors die, für die dauerhafte Magnetisierung der Magnetkörper erforderliche Flussdichte nicht herzustellen vermögen.

Durch die Druckschrift DE-102008026543 (A1) ist bereits eine mehrschichtige Magnetanordnung in einer Permanentmagnetmaschine bekannt, die als Antriebsmotor bei Kraftfahrzeugen dient. Diese Permanentmagnetmaschine umfasst einen Rotor, der die einmontierten Permanentmagnete trägt. Der Rotor ist von einem Stator umgeben, der statische Spulen umfasst. Dabei war die Zielsetzung, einerseits einen Permanentmagnet bereitzustellen, der hoher Stärke aufweist, andererseits einen Permanentmagnet bereitzustellen, der in der Lage ist, dem Entmagnetisierungsfeld standzuhalten, das in der Betriebsumgebung eines Permanentmagnetmotors existiert. Dies wird dadurch erreicht, dass jeder mehrschichtige Permanentmagnet entgegengesetzte erste und zweite Enden aufweist, wobei der erste Magnet, der an dem ersten Ende angeordnet ist, und der zweite Magnet, der an dem zweiten Ende angeordnet ist, gekoppelt ist.

Das Magnetisieren solcher Maschinen gestaltet sich jedoch in der Praxis äußerst schwierig, da die Permanentmagnete nicht an der Oberfläche des Rotors angeordnet sind, wo die Flussdichte der externen Magnetisierungsspulen so groß ist, dass die Magnetisierung der Permanentmagnete vollständig und sicher erfolgen könnte. Bei diesen Maschinentypen sind die Permanentmagnete also im Inneren des Rotors angeordnet, deshalb reichen die Feldstärken äußerer Spulen praktisch nicht aus. Demzufolge entsteht bei diesem Maschinentyp ein wesentlicher Nachteil dadurch, dass die Permanentmagnete bereits vormagnetisiert eingesetzt werden müssen, was einerseits umständlich und technologisch schwierig ist, andererseits - im Verhältnis zu den Oberflächenmagnetmaschinen - mit deutlich höheren Fertigungs- und Montierungskosten verbunden ist. Diese Nachteile verhinderten bisher offensichtlich auch einen breiteren Einsatz der obigen Motortypen in Anwendungen mit hohen Stückzahlen, wie es z.B. in der Autoindustrie erwartet wird.

Aus der Druckschrift EP-0981457 (B1) sind ferner eine Antriebsvorrichtung zu Scheibenwischern oder Schiebedächern von Fahrzeugen, sowie ein Verfahren zum Herstellen solcher Vorrichtung mit einer Ringscheibe aus magnetisierbarem Werkstoff bekannt. Das Ziel der Erfinder war dabei, für unterschiedliche Fahrzeugtypen unterschiedliche Schalträder als ein neutrales Bauteil aus magnetisierbarem Werkstoff auf Vorrat zu legen, und erst kurz vor seinem Einbau oder ggf. nach seinem Einbau in die jeweilige individuelle Antriebsvorrichtung durch Aufmagnetisieren mithilfe eines Magnetisierungsmusters, das dem betreffenden Anwendungsfall entspricht. Obwohl diese Lösung zu Antreiben von Scheibenwischern oder Schiebedächern vorgeschlagen ist, was vom vorliegenden Erfindungsgegenstand ziemlich fern liegt, ist daraus die Aufmagnetisierung eines Elementes nach seinem Einbau bekannt.

### DAS WESEN DER ERFINDUNG

Der Erfindung liegt die primäre Aufgabe zugrunde, die vorstehend genannten Nachteile von herkömmlichen Lösungen zu beseitigen, um dadurch eine verbesserte Technologie zu schaffen, mittels welcher die Magnetisierung der Permanentmagneten, insbesondere der mehrschichtigen Permanentmagneten im Rotor einer permanent-erregter Synchronmaschine, insbesondere eines Hybrid-Synchronmotors intensiver, effektiver und kosteneffizienter, als beim Stand der Technik, durchgeführt werden kann.

Andererseits soll durch die Erfindung die Montierung des Rotors vereinfacht werden und die Magnetisierungstaktzeiten verkürzt werden.

Die gestellte Aufgabe wird gemäß der Erfindung durch die Merkmale des Verfahrens nach dem beigelegten Anspruch 1, sowie der Magnetisierungseinrichtung nach dem Anspruch 8 und des vorgeschlagenen Rotors nach dem Anspruch 10 gelöst.

Die Erfindung beruht sich auf der Erkenntnis, dass um permanent-erregter Motoren kosteneffizient produzieren zu können, sollten die Permanentmagnete in unmagnetisiertem Zustand in den Produktionsprozess einfließen. Das Einschieben eines aufmagnetisierten Permanentmagnets in seine Rotoröffnung bei Montierung ist eigentlich in der Praxis sehr schwierig, wie oben erwähnt wurde. Die Rotoren werden daher erfindungsgemäss mit unmagnetischen Permanentmagneten bestückt und danach die in den vormontiertem Rotor eingebauten Permanentmagnete in Segmenten oder als Ganzes mithilfe einer speziellen Magnetisiereinrichtung dauerhaft *In-situ* aufmagnetisiert.

Das Wesen der Erfindung liegt also einerseits in der Anordnung der Spule in der Gestalt, dass sie während des *In-situ* Magnetisierungsvorganges unter Ausnutzung der Hohlräume des Rotors zur Aufnahme der magnetisierenden Spulen, z.B. Flussbarrieren und/oder Luftkavitäten, die diesem Motortyp zu eigen ist, ins Innere des Rotors gebracht wird. Dadurch wird die Magnetfeldstärke zum Aufmagnetisieren der Permanentmagnete nicht nur - gegenüber dem Stand der Technik - deutlich erhöht, sondern kann dadurch während des Magnetisierens auch die Homogenität des Magnetfeldes, also die Parallelität der Magnetflusslinien positiv beeinflusst werden. Auch hier wird eine deutliche Verbesserung gegenüber dem Stand der Technik erreicht.

Durch die Anwendung der Erfindung kann die *in-situ* Magnetisierung mehrschichtig aufgebauter permanent-erregter Synchronmotore, insbesondere Hybrid-Synchronmotore (HSM) während deren Produktionsprozess einwandfrei und effektiv durchgeführt werden. Die Permanentmagnete sind bei den Hybrid-Synchronmotoren (HSM) in zwei oder mehreren Schichten übereinander angeordnet. Dies ist mit einem Vorteil verbunden, dass ein wesentlicher Anteil des Drehmomentes aus der Reluktanz gewonnen wird. Ein weiterer Vorteil dieser Magnetanordnung liegt darin, dass dieser Anteil des Reluktanzmoments in seinem Flussverhalten steuerbar wird, und dadurch der Synchronmaschine einen großen Bereich konstanter Leistung über einen sehr weiten Drehzahlbereich erschließt (Feldschwächen).

Nach einem weiteren Merkmal der Erfindung werden zur erfindungsgemäßen *In-situ* Magnetisierung vorzugsweise mehrere magnetisierende Spulen, mindestens drei Spulen eingebracht, wobei die zwei äußeren Spulen die Funktion von "magnetischen Linsen" übernehmen können, um ein recht paralleles Magnetisierungsfeld für die eingeschobenen Permanentmagnete zu erreichen.

Ein wesentlicher Vorteil der Erfindung ist die überraschend effiziente Magnetisierung, d.h., das Verhältnis der eingesetzten Energie, um die Permanentmagnete zu magnetisieren, zu der Nutzenergie, die dann schlussendlich in den Permanentmagneten gespeichert wird. Diese Speicherung wird - nach unseren Erfahrungen - durch die Nähe der Spule zum Magneten besonders groß.

Nach einem weiteren Merkmal der Erfindung ist es insbesondere vorteilhaft, wenn die Taktzeiten durch das elektrische Wiederaufladen der Magnetiesierungseinrichtung limitiert werden. Wäre z.B. eine Dauerleistung von rund 20 Kilowatt erforderlich ab Netz, dann könnte damit alle 3 Minuten einen Motor - nach unseren Erfahrungen - magnetisiert werden. Daraus ist es vorstellbar, wie viel Energien in die Permanentmagneten hineingehen. Wäre jedoch der Wirkungsgrad aufgrund von Streuverlusten groß, weil z.B. die Magnetisierungsspulen nicht nahe an den Magneten herangebracht würden, so würde, z.B. die Rotorbleche unnötig erwärmt werden und Streuenergie teilweise verloren gehen. Der Permanentmagnet ist also eigentlich ein Energiespeicher von gewaltigem Aussmass.

Nach einer weiteren Erkenntnis des Erfinders bilden die eingebetteten Permanentmagnete (in der Regel mehrere Permanentmagneten in Schichten übereinander) - sobald sie aufmagnetisiert sind - Flussbarrieren, in den sie die schmalen Stege zwischen sich und den Hohlräumen (z.B. Luftkavitäten) für die Spulen sättigen. Diese Motore haben im Ergebnis eine konstante Leistung über einen weiten Drehzahlbereich.

So lange es die Festigkeit der Rotorbleche zulässt, können vorzugsweise im inneren Bereich des Rotors auch zusätzliche Hohlräume, z.B. Luftkavitäten zur Aufnahme zusätzlicher Spulen vorgesehen werden, da in diesem Bereich das Hauptmagnetfeld schon keine Rolle mehr spielt. Deswegen muss man dort nicht auf magnetische Querschnitte Rücksicht nehmen.

Dieses Merkmal der Erfindung ermöglicht noch, zusätzliche Hohlräumen, z.B. Luftkavitäten und/oder Flussbarrieren und auch zusätzliche magnetisierende Spulen außerhalb der Rotorgeometrie (d.h. zum Beispiel im Stator und/oder in der Rotorwelle) anzuordnen, um die Magentisierungslinien mindestens im Bereich der Permanentmagnete im Rotor weiter zu parallelisieren, wodurch die Magnetisierung der Permanentmagnete verbessert wird. Dies wird umso leichter, je größer die Polzahl der Maschine ist. Zum Beispiel ist bei 10-poligen Maschinen genügend Platz für diese zusätzlichen Hohlräumen bzw. Kavitäten, die zusätzliche Magnetisierungsspulen aufnehmen können.

Im Sinne der Erfindung werden also die an den Magnettaschen angrenzenden Hohlräume, z.B. Luftkavitäten, die zusammen mit der Magnettasche die ununterbrochene Flussbarriere bilden, benutzt, um dort Magnetisierungsspulen anzuordnen. Diese Hohlräume bzw. Luftkavitäten werden während des Magnetisierungsvorganges mit den Leitern der Spule in einer Weise gefüllt, dass die geteilte Spule vorzugsweise aus zwei aufklappbaren Hälften besteht, welche in die Hohlräume des Rotors eingelegt bzw. aufgezogen werden, und die parallel oder in Reihe geschaltet unmittelbar vor dem Magnetisieren zu einem elektrischen Kreis geschlossen werden. Die beiden Spulenhälften berühren sich im Inneren oder am äußeren Rand des Rotorkerns und bilden dann zugleich auch einen elektrischen leitenden Kontakt für den Magnetisierungsstrom.

Die erfindungsgemäße Technologie hat den Hauptvorteil, dass dadurch vormontierte aber noch unmagnetisierte Magnetkörper sogar von mehrschichtig aufgebauten Synchronmotoren einfach und wirkungsvoll *In-situ* aufmagnetisiert werden können. Dadurch werden - während der Herstellungstechnologie der Synchronmaschinen - die Montage und die Orientierung der einzubauenden Rotorelemente in großem Masse vereinfacht und erleichtert.

Die Richtungen der technischen Verbesserungen im Sinne der Erfindung könnten folgenderweise gruppiert werden:
a) Eine spezielle *In-situ* Magnetisierungstechnologie (Verfahren und Einrichtung), bei welcher die vorgeschlagenen Magnetisierungsspulen vorzugsweise trennbar ausgeführt werden, so dass sie im Produktionsprozess in das Rotorinnere einfach eingeführt werden können. Dadurch können sehr kurze Taktzeiten realisiert werden;
b) Eine spezielle Anordnung der Spulen im Rotorkern in solcher Weise, dass sie möglichst nahe an den zu magnetisierenden Permanentmagneten herangeführt werden. Dadurch wird einerseits die erforderliche Magnetisierungsleistung relative verringert, und werden andererseits die Magnetisierungsparameter in engen Toleranzen eingehalten;
c) Die erfindungsgemäße Rotorgeometrie ist in solcher Weise ausgestaltet, dass sie den eindringenden stromführenden Leiter der Magnetisierungsspule möglichst viel Raum während des Produktionsprozesses bietet. Diese Maßnahme hat die Vorteile, dass einerseits die Verlustleistung in der Magnetisierungseinrichtung klein bleibt, und andererseits kurze Taktzeiten eingehalten werden können;
d) Gemäß der Erfindung besteht die Möglichkeit, allenfalls vorhandener Kavitäten und/oder Flussbarrieren in der Rotorgeometrie als Hohlräume für die stromführenden Teile der Magnetisierungsspule auszunutzen;
e) Die stromführenden Teile der Magnetisierungsspule sind so ausgestaltet, dass sie die in der Rotorgeometrie ausgebildeten Hohlräume, bzw. vorhandenen Kavitäten und/oder Flussbarrieren mit größtmöglichem Füllfaktor ausfüllen. Dadurch kann die Verlustleistung in den Spulen relative klein halten;
f) Bei einer bevorzugten Ausführungsform besteht der Rotor aus Scheiben. Diese Rotorscheiben gegebenenfalls könnten z.B. nacheinander aufmagnetisiert werden, und erst im aufmagnetisierten Zustand auf die Rotorwelle aufgezogen werden. Dadurch wird - nach unseren Erfahrungen - eine hohe Prozesssicherheit erreicht. Bei der bevorzugten Ausführung der Erfindung werden aber zuerst die unmagnetisierten Scheiben des Rotors zu einem Bündel (Paket) zusammengebaut, bzw. vormontiert werden, und danach das ganze Bündel von Rotorscheiben mittels der vorgeschlagenen Magnetisierungseinrichtung *In-situ* aufmagnetisiert wird.

### KUERZE BESCHREIBUNG DER ZEICHNUNGEN

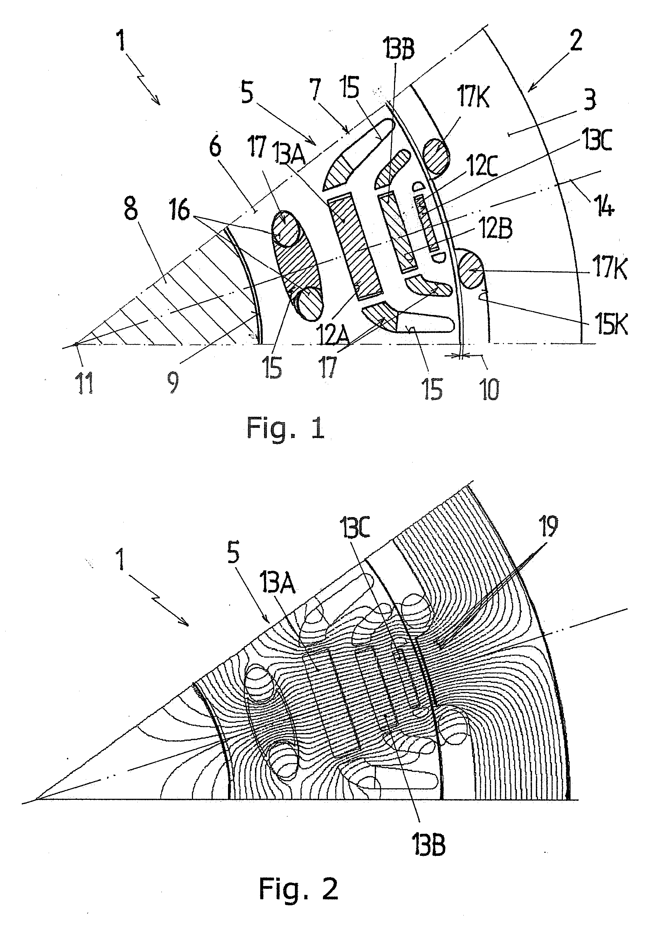

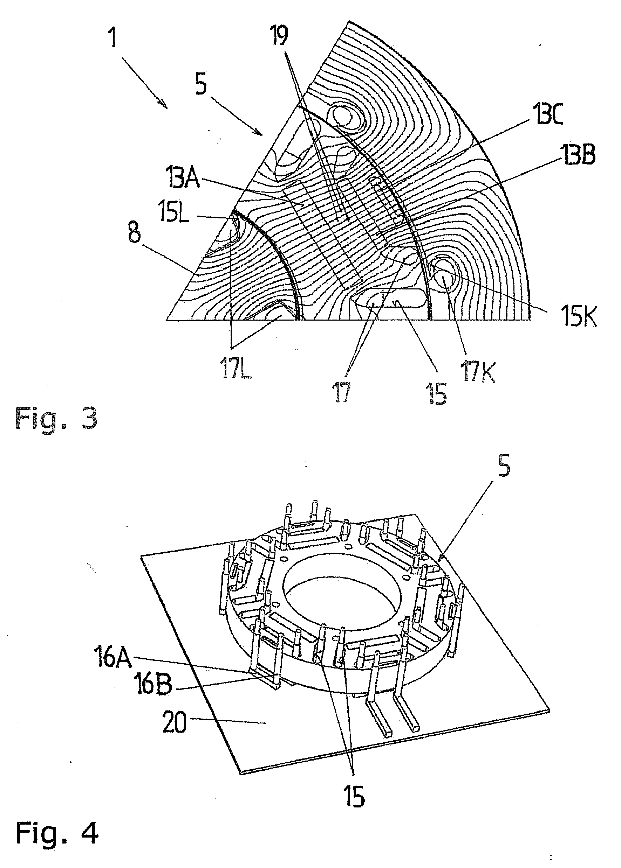

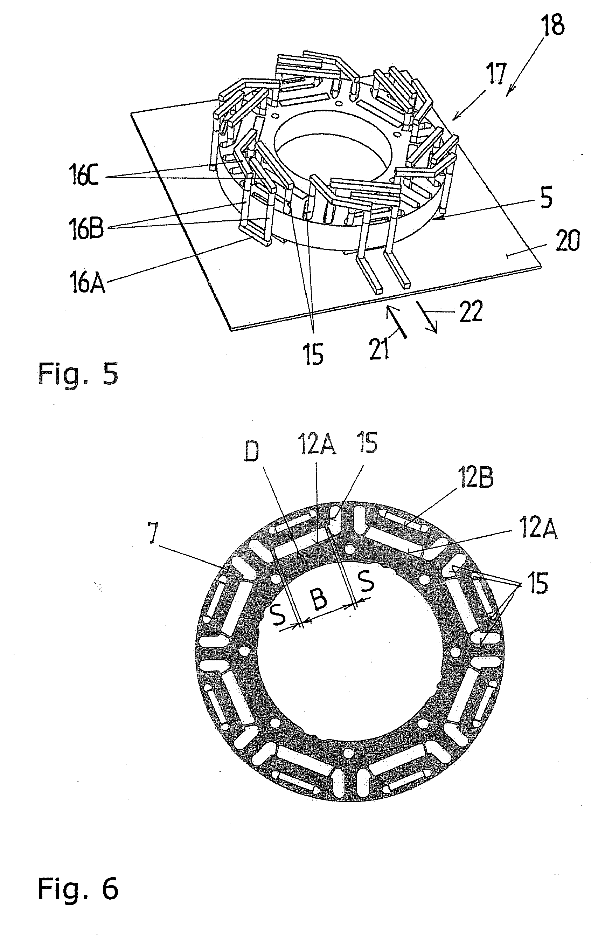

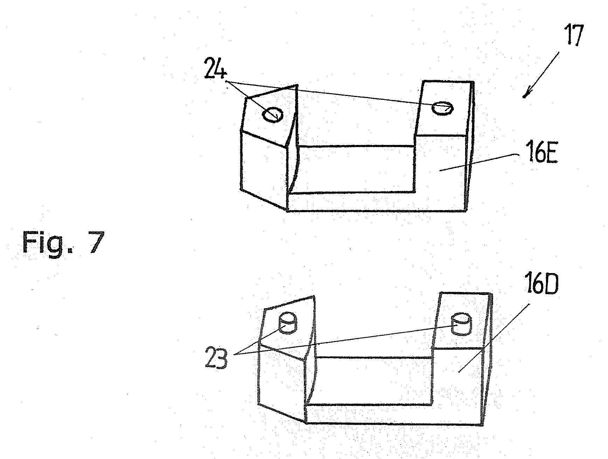

Die vorliegende Erfindung wird nachstehend unter Bezugnahme auf die Zeichnungen näher erläutert, die ein Ausführungsbeispiel der erfindungsgemäßen Einrichtung illustrieren. Es zeigen:
■ Figur 1 eine Querschnittsansicht über ein Segment einer beispielhaften Permanentmagnetmotor (10-polige HSM) nach der Erfindung, mit einem vormontierten jedoch zu magnetisierenden Rotor;
■ Figur 2 einen ähnlichen Querschnittsansicht wie Fig. 1, mit der Verteilung der Magnetfeldstärke in Permanentmagneten während des *In-situ* Magnetisierungsverfahrens nach der Erfindung;
■ Figur 3 eine Variante der Rotorgeometrie nach Fig. 1, mit der Verteilung der Magnetfeldstärke bei einer 6-polige HSM während des *In-situ* Magnetisierungsverfahrens nach der Erfindung;
■ Figur 4 eine schematische perspektivische Ansicht des vormontierten Rotors mit teilweise eingelegten stromführenden Teilen von Magnetisierungsspulen nach der Erfindung;
■ Figur 5 eine perspektivische Ansicht wie Figur 4, mit den miteinander verbundenen Spulenteilen;
■ Figur 6 eine Oberansicht eines Ausführungsbeispieles eines Rotorbleches;
■ Figur 7 eine perspektivische Ansicht eines weiteren Ausführungsbeispieles einer geteilten magnetisierenden Spule nach der Erfindung.

In den Zeichnungen sind gleiche oder äquivalente Elemente mit den gleichen Bezugszeichen bezeichnet.

### BESCHREIBUNG EINES AUSFÜHRUNGSBEISPIELES

Figur 1 ist eine Teilquerschnittsansicht eines Ausführungsbeispieles einer erfindungsgemäßen Permanentmagnetmaschine 1, welche in diesem Falle als ein 10-polige permanent-erregter Hybrid-Synchronmotor (HSM) insbesondere für den Antrieb eines Hybrid- oder Elektrofahrzeug ausgestaltet ist. Die Permanentmagnetmaschine 1 hat einen Stator 2 mit einem Statorkörper 3, in welchem ein zylindrischer Innenraum 4 ausgebildet ist, und in diesem zylindrischen Innenraum 4 ein Rotor 5 koaxial und drehbar angeordnet ist. Der Statorkörper 3 in an sich bekannter Weise mit Spulen (nicht dargestellt) versehen.

Der Rotor 5 weist einen hohlen zylindrischen Rotorkern 6 auf, in welcher eine Vielzahl magnetisierbarer Stahlbleche 7 (siehe auch Fig. 7) gestapelt ist, die zusammen die Form eines Zylinders bilden. Eine Rotorwelle 8 ist in einer zentralen Öffnung 9 des Rotorkerns 6 angeordnet, welcher zusammen mit der Rotorwelle 8 rotiert. Der Rotorkern 6 ist von dem hohlen Statorkörper 3 um einen vorbestimmten radialen Spalt 10 angeordnet. Der Mittelpunkt des Rotors 5 ist in Fig. 1 mit 11 bezeichnet.

In dem Rotorkern 6 sind mehrere, bei diesem Ausführungsbeispiel in jedem Rotorsegment drei Einschubslöcher 12A, 12B und 12C in einer umlaufenden Anordnung ausgebildet, welche Permanentmagnete 13A, 13B bzw. 13C aufnehmen, bzw. als Magnettaschen "einbetten" können. Wie in Fig. 1 dargestellt ist, haben die Permanentmagnete 13A, 13B und 13C bei diesem Ausführungsbeispiel verschiedene Querschnitte, und nimmt dementsprechend die Dicke und Breite der Permanentmagnete 13A, 13B und 13C - radial betrachtet - von den äußeren Permanentmagneten 13C nach innen ständig zu. Die Permanentmagnete 13A, 13B und 13C liegen nach Fig. 1 miteinander parallel, und sind voneinander mit einem Abstand, sowie zu einer radialen Mitte-Ilinie 14 des dargestellten Rotorsegments (Fig. 1) etwa senkrecht angeordnet.

Im Sinne der Erfindung sind im Rotorkern 6 - vorzugsweise in der Nähe der Permanentmagnete 13A, 13B und 13C - Hohlräume 15 (z.B. Kavitäten und/oder Flussbarrieren) vorgesehen, welche als Aufnahmeräume für stromführende Teile 16 von geteilten magnetisierenden Spulen 17 einer Magnetisierungseinrichtung 18 dienen. Wenn z.B. Kavitäten und/oder Flussbarrieren in der Rotorgeometrie schon zur Verfügung stehen, dann können gegebenenfalls auch diese als solche Hohlräume 15 erfindungsgemäss ausgenutzt werden.

In Figur 1 sind auch die stromführenden Teile 16 der trennbaren Spulen 17 der Magnetisierungseinrichtung 18 in den Rotor 5 eingebautem Zustand zur erfindungsgemäßen *In-situ* Aufmagnetisierung der Permanentmagnete 13A, 13B und 13C dargestellt (*"In-situ"* bedeutet in der Praxis: "An Ort und Stelle" des Werkstückes wird die Behandlung durchgeführt), die jedoch vor oder während ihrer Einbau noch nicht aufmagnetisierten wurden, um die Montierungsarbeiten und die Orientierung der Elemente zu erleichtern. Die stromführenden Teile 16 der Spule 17 werden noch eingehender nachstehend, in Zusammenhang mit Figuren 4,5 und 7 beschrieben.

Figur 2 illustriert nach unseren Testergebnissen ein homogenes Magnetfeld bei der Rotorgeometrie nach Figur 1 während des erfindungsgemäßen *In-situ* Magnetisierungsverfahrens. Wie hier ersichtlich, erzielten wir durch die spezielle Anordnung der stromführenden Teile 16 der magnetisierenden Spulen 17 in allen drei Permanentmagneten 13A, 13B, 13C parallele Magnetflusslinien 19 im Bereich der Permanentmagneten 13A, 13B, 13C.

Das obige homogene Magnetfeld kann auch an unterschiedliche Rotorgeometrien angepasst werden. Ein Beispiel dazu ist in Figur 3 zu sehen, wobei eine ähnliche Rotorgeometrie - wie in Figuren 1 und 2 - bei einem 6-poligen permanent-erregten Hybrid-Synchronmotor (HSM) verwendet wird. Die Magnetflusslinien 19 sind auch hier parallel im Bereich der Permanentmagneten 13A, 13B, 13C während des erfindungsgemäßen *In-situ* Magnetisierungsverfahrens.

Es ist zu erwähnen, dass im Sinne der Erfindung ggf. zusätzliche magnetisierende Spulen 17 sogar außer der Rotorgeometrie angeordnet werden können, um die Homogenität des Magnetfeldes weiter zu fördern. In Figur 1 und 2 sind außer dem Rotorkern, d.h. im Statorkörper 3 zwei zusätzliche äußere magnetisierende Spulen 17K in zusätzlichen äußeren Hohlräume 15K angeordnet. In Figur 3 werden - neben den zwei zusätzlichen äußeren Spulen 17K auch zusätzliche innere magnetisierende Spulen 17L vorgesehen, welche außer des Rotorkerns in zusätzlichen inneren Hohlräumen 15L (z.B. in der Rotorwelle 8) angebracht sind.

Figur 4 zeigt eine schematische perspektivische Ansicht des vormontierten Rotors 5, d.h. das zusammengebaute Bündel der Rotorbleche 7, mit teilweise eingelegten stromführenden Teilen 16 der geteilten magnetisierenden Spulen 17, die eigentlich Teile der erfindungsgemäßen Megnetisierungseinrichtung 18 (als Ganzes nicht illustriert) sind. Die stromführenden Teile 16 der geteilten Spulen 17 sind bei diesem Ausführungsbeispiel horizontale Basisstäbe 16A und vertikale Formstäbe 16B, die zum Eindringen in den Hohlräumen 15 ausgebildet und unten paarweise mit je einem Basisstab 16A zu Halbwindungen der Spule 17 verbunden werden.

Es ist auch eine solche Montagetechnologie vorstellbar, bei welcher zuerst die stromführenden Teile 16A, 16B der Spulen 17 - in ihren vorbestimmten Lagen - auf einer Basisplatte 20 provisorisch fixiert werden, und danach der Rotor 5, d.h. das vormontierte Bündel der Rotorblechen 7 von oben auf die noch offenen Spulenteilen 16B aufgesetzt wird (Fig. 4).

Als ein Querverbinder wird ein weiterer stromführenden Teil 16C der Spule 17 danach von oben auf den Formstäben 16B aufgesetzt (siehe Figur 5) und stellt im Endpunkt dieser Bewegung eine elektrische leitende Verbindung zwischen den entsprechenden beiden verbundenen Formstäben 16B her. Erst dann ist ein Strompfand für den Magnetisierungsstrom geschlossen (Figur 5).

In Figur 5 dargestellter Ausführungsform sind die Spulen 17 in Reihe geschaltet. Eine parallele Verbindung deren wäre aber gegebenenfalls auch möglich. Ein Magnetisierungsstrom wird z.B. an einer Stelle (bezeichnet mit einem Pfeil 21) eingeleitet zur Durchführung des erfindungsgemäßen *In-situ* Magnetisierungsverfahrens und an einer anderen Stelle (bezeichnet mit einem Pfeil 22) vom Rotor 5 abgeleitet.

Eine Oberansicht eines weiteren Ausführungsbeispiels des Rotorbleches 7 nach der Erfindung ist in Figur 6 zu sehen. Es unterscheidet sich vom Ausführungsbeispiel nach Figuren 1-3 einerseits darin, dass hier in jedem Rotorsegment nur zwei Einschubslöcher 12A und 12B ausgebildet sind, welche je einen Permanentmagnet (nicht gezeigt) aufnehmen. Andererseits, sind hier in jedem Rotorsegment beidseitig nur zwei-zwei Hohlräume 15 zur Aufnahme je einen Spulenteil (nicht gezeigt) vorgesehen.

Wie in Figur 6 schematisch dargestellt wurde, sind die Dicke D und die Breite B der Einschublöcher 12 und dementsprechend auch die Dicke und Breite der Permanentmagneten 13A, 13B, 13C (siehe auch Fig. 1) von außen nach innen - in radialer Richtung betrachtet - ständig zunehmend gewählt. Andererseits, ist zwischen der Einschublöcher 12 und die Hohlräumen 15 jeweils nur einen minimalen Steg S vorgesehen (Fig. 6), um dadurch die Verlustleistung in den Spulen relative klein zu halten.

In Figur 7 ist eine weitere Ausführungsform der stromführenden Teile der geteilten magnetisierenden Spule 17 zu sehen, welche als U-förmige Hälfte 16D und 16E ausgebildet sind. Das untere Teil 16D ist mit zwei Zapfen 23 versehen, die in Öffnungen 24 des oberen Teils 16E eingeschoben werden können, wenn das untere Teil 16D umgekehrt auf dem oberen Teil 16E aufgesetzt ist.

Es ist aber zu betonen, dass auch weitere Ausführungsformen der Spulenteilen der Permanentmagnete und des Rotorgeometrie, sowie des *In-situ* Magnetisierungsverfahrens im Rahmen der Erfindung vorstellbar sind, zu welchen jedoch - in Kenntnis der vorliegenden Offenbarung der Erfindung - ein Fachmann auf diesem Fachgebiet keine weitere technische Lehre brauchen würde.

Die Arbeitsweise der *In-situ* aufmagnetisierten fertigen Permanentmagnetmaschine 1 nach Figuren 1-2 und 4-5 ist, wie folgt:
Wird elektrischer Strom an die Spulen des Stator 2 geliefert, werden die Polaritäten der Spulen sequenziell verändert. Folglich wird an Statorzähnen ein magnetisches Drehfeld erzeugt, und ein Magnetfeld wird auch an dem Rotor 5 erzeugt, in welchen die *In-situ* aufmagnetisierten Permanentmagnete 13A, 13B und 13C eingebettet sind. Das Magnetfeld des Rotors 5 folgt dem magnetischen Drehfeld, das an den Statorzähnen erzeugt wird. Als Ergebnis erzeugt eine Drehung des Rotors 5 die Drehantriebskraft an der Rotorwelle 8.

Durch die spezielle Anordnung der stromführenden Teile 16 der magnetisierenden Spulen 17, vorzugsweise binnen des Rotors 5, sowie durch die eigenartige Rotorgeometrie werden miteinander parallele Magnetflusslinien 19 mindestens im Bereich der Permanentmagneten 13A, 13B, 13C und ein homogenes Magnetfeld bei der *in-situ* Aufmagnetisierung der Permanentmagneten erreicht. Diese wichtigen Ereignisse der Erfindung sind mit bedeutenden Vorteilen verbunden, welche oben schon erwähnt wurden, und welche bei den bekannten Lösungen unvorstellbar sind.

Die Erfindung kann mit den obigen Vorteilen insbesondere bei elektrischen Maschinen, insbesondere Traktionsantrieben, Produktionsprozessen, Optimierung von Produktionsmethoden, Verringerung von Fertigungsrisiken, usw. angewendet werden.

### LISTE DER BEZUGSZEICHEN:

- 1 -: Permanentmagnetmaschine
- 2 -: Stator
- 3 -: Statorkörper
- 4 -: zylindrischer Innenraum
- 5 -: Rotor
- 6 -: Rotorkern
- 7 -: Rotorblech
- 8 -: Rotorwelle
- 9 -: Öffnung
- 10 -: Spalt
- 11 -: Rotormittelpunkt
- 12A -12C -: Einschubslöcher
- 13A -13C -: Permanentmagnete
- 14 -: radiale Mittellinie
- 15; 15K, 15L -: Hohlräume
- 16A-16E: stromführende Teile
- 17; 15K, 15L: magnetisierende Spulen
- 18 -: Magnetisierungseinrichtung
- 19 -: Magnetflusslinien
- 20 -: Basisplatte
- 21 -: Pfeil
- 22 -: Pfeil
- 23 -: Zapfen
- 23 -: Öffnungen
- D -: Dicke
- B -: Breite
- S -: Steg

## Patentansprüche

1. Verfahren zur Magnetisierung einer permanent-erregter Synchronmaschine (1), insbesondere eines permanent-erregten Hybrid-Synchronmotor mit, in seinem Rotor (5) eingebetteten Permanentmagneten (13A, 13B, 13C), bei welchem die Permanentmagnete durch die Anwendung von Spulen (17) einer Magnetisierungseinrichtung magnetisiert werden, **dadurch gekennzeichnet, dass** - zur Vereinfachung der Montierung und Verkürzung der Magnetisierungstaktzeiten - die Permanentmagnete (13A, 13B, 13C) in ihrem unmagnetisierten Zustand in den vormontierten Rotor (5) eingelegt werden, und danach deren Magnetisierung während des Produktionsverfahrens der Synchronmaschine (1) mittels der, mindestens großenteils ins Innere des zu magnetisierenden Rotors (5) angeordneten magnetisierenden Spulen (17) einer Magnetisierungseinrichtung (18) *In-situ* durchgeführt wird.

2. Verfahren nach Anspruch 1, **dadurch gekennzeichnet, dass** die *In-situ* Aufmagnetisierung der Permanentmagneten (13A, 13B, 13C) durch getrennte Spulen (17) der Magnetisierungseinrichtung (18) durchgeführt wird, wozu die getrennten Spulen (17), bzw. deren stromführenden Teile (16A, 16B, 16C; 16D, 16E) in vorgefertigten Hohlräumen (15A, 15B, 15C), insbesondere Luftkavitäten und/oder Flussbarrieren des Rotors (5) angeordnet werden, wobei die Hohlräume (15A, 15B, 15C) vorzugsweise in der Nähe der Permanentmagnete (13A, 13B, 13C) ausgebildet werden.

3. Verfahren nach Anspruch 2, **dadurch gekennzeichnet, dass** im Rotor (5) die Hohlräume (15A, 15B, 15C) in der unmittelbarer Nähe der Permanentmagnete (13A, 13B, 13C) in solchem Sinne ausgebildet werden, um damit Flussbarriere, sowie eine Homogenität des Magnetfeldes und vorzugsweise eine Parallelität von Magnetflusslinien (19) mindestens im Bereich der Permanentmagnete (13A, 13B, 13C) zu erreichen.

4. Verfahren nach Anspruch 2 oder 3, **dadurch gekennzeichnet, dass** als die Hohlräume (15A, 15B, 15C) zur Aufnahme der Spulen (17) bzw. deren stromführenden Teile (16) die vorliegenden Luftkavitäten und/oder Flussbarrieren des Rotors (5) verwendet werden.

5. Verfahren nach einem der Ansprüche 1 bis 4, **dadurch gekennzeichnet, dass** die *In-situ* Aufmagnetisierung der Permanentmagnete (13A, 13B, 13C) vorzugsweise in Segmenten des Rotors (5) durchgeführt wird, wobei zur *In-situ* Aufmagnetisierung der Permanentmagnete (13A, 13B, 13C) vorzugsweise in jedem Rotorsegment mindestens drei Spulen (17) vorgesehen werden, wobei die äußeren Spulen (17) auch als magnetische Linsen zur Parallelisierung des Magnetisierungfeldes für die der Permanentmagnete (13A, 13B, 13C) angewendet werden.

6. Verfahren nach einem der Ansprüche 1 bis 5, **dadurch gekennzeichnet, dass** zu einer verbesserten Parallelisierung des Magnetisierungfeldes für die Permanentmagnete (13A, 13B, 13C) zusätzliche Hohlräume (15K, 15L) für Aufnahme zusätzlicher Spulen (17K, 17L) im - radial betrachtet - inneren Bereich des Rotors (5) und/oder außerhalb des Rotors (5) vorgesehen werden.

7. Verfahren nach einem der Ansprüche 1 bis 6, **dadurch gekennzeichnet, dass** zur Verminderung der Magnetisierungsverlustleistung die Hohlräume (15) durch die Spulen (17), bzw. deren stromführenden Teile (16A, 16B, 16C) größtmöglich ausgefüllt werden.

8. Einrichtung zur Magnetisierung permanent-erregter Synchronmaschine, insbesondere eines permanent-erregten Hybrid-Synchronmotors mit mehrschichtig in einem Rotor eingebetteten Permanentmagneten, insbesondere zur Durchführung des Verfahrens nach einem der Ansprüche 1 bis 7, welche Einrichtung magnetisierende Spulen (17) mit stromführenden Teilen aufweist, **dadurch gekennzeichnet, dass** die magnetisierenden Spulen (17) zur *In-situ* Aufmagnetisierung der Permanentmagnete (13A, 13B, 13C) des Rotors (5) getrennt und in die Hohlräume (15) des vormontierten Rotors (5) einsetzbar und miteinander verbindbar ausgebildet sind.

9. Einrichtung nach Anspruch 8, **dadurch gekennzeichnet, dass** jede geteilte magnetisierende Spule (17) mindestens aus zwei, miteinander verbindbaren Teilen (16A, 16B, 16C; 16D, 16E) besteht.

10. Rotor (5) für eine permanent-erregte Synchronmaschine (1), insbesondere permanent-erregte Hybrid-Synchronmaschine mit eingebetteten Permanentmagneten (13A, 13B, 13C), insbesondere zur Durchführung des Verfahrens nach einem der Ansprüche 1 bis 7, bei welchem die Permanentmagneten (13A, 13B, 13C) vorzugsweise mehrschichtig in Einschubslöchern (12A, 12B, 12C) eines Rotorkerns (6) angeordnet sind, **dadurch gekennzeichnet, dass** die Permanentmagnete (13A, 13B, 13C) in unmagnetisiertem Zustand in den Einschubslöchern (12A, 12B, 12C) des vormontierten Rotors (5) eingebaut sind; und im Rotorkern (6) solche Hohlräume (15) in der Nähe der Einschubslöchern (12A, 12B, 12C) vorgesehen sind, welche zur Aufnahme mindestens teilweise je einer geteilten Spule (17) zur *In-situ* Aufmagnetisierung der Permanentmagnete (13A, 13B, 13C) ausgestaltet sind.

11. Rotor nach Anspruch 10, **dadurch gekennzeichnet, dass** im Rotorkern (6) gegebenenfalls vorliegende Luftkavitäten und/oder Flussbarrieren als die Hohlräume (15) zur Aufnahme mindestens teilweise je einer Spule (17) angewendet sind.

12. Rotor nach Anspruch 10 oder 11, **dadurch gekennzeichnet, dass** der Rotor (5) aus unmagnetisierten Rotorblechen (7) zu einem zylindrischen Bündel vormontiert ist.

13. Rotor nach einem der Ansprüche 10 bis 12, **dadurch gekennzeichnet, dass** in jedem Rotorsegment die Hohlräume (15) für die Spulen (17) und die Einschublöchern (12) für die Permanentmagnete (13A, 13B, 13C) zu einer radialen Mittellinie (14) eines Rotorsegments spiegelbild-artig angeordnet bzw. ausgestaltet sind.

14. Rotor nach einem der Ansprüche 10 bis 13, **dadurch gekennzeichnet, dass** im Rotorkern (6) die Einschublöchern (12A, 12B, 12C) der Permanentmagneten (13A, 13B, 13C) miteinander parallel und voneinander mit einem Abstand, sowie zu radialer Mittellinie (14) des Rotorsegments vorzugsweise senkrecht angebracht sind.

15. Rotor nach einem der Ansprüche 10 bis 14, **dadurch gekennzeichnet, dass** eine Dicke (D) und Breite (B) der Einschublöcher (12) und dementsprechend eine Dicke und Breite der Permanentmagneten (13A, 13B, 13C) von außen nach innen - in radialer Richtung betrachtet - ständig zunehmend gewählt sind.
